# EUROPEAN PATENT APPLICATION

(11) **EP 4 822 794 A1**
(43) Date of publication of application: **14.10.2026**
(21) Application number: 26171336.6
(22) Date of filing: 09.04.2026
(51) Int. Cl.: H01M 10/04, H01M 50/242

(54) **PLATE END FOR CELL SWELLING PREVENTION, METHOD OF MANUFACTURING THE SAME, AND SECONDARY BATTERY USING THE SAME**

(30) Priority: 11.04.2025 KR 20250047712
(71) Applicant: SAMSUNG SDI CO., LTD., Yongin-si, Gyeonggi-do 17084 (KR)
(72) Inventor: HWANG, Sujin, 17084 Yongin-si, Gyeonggi-do (KR)
(74) Representative: Gulde & Partner

(57) **Abstract**

A plate end for cell swelling prevention is provided that absorbs stress caused by cell swelling in secondary batteries. The plate end includes: a laminated part including a curved metal plate having multiple, individual layers; and fixing parts at opposite ends of the laminated part to fix the plate end.

## Description

### BACKGROUND

### 1. Field

Aspects of embodiments of the present invention relate to a plate end for cell swelling prevention, a method of manufacturing the same, and a secondary battery and electric vehicle including the same.

### 2. Description of the Related Art

Different from primary batteries, which are not designed to be (re)charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as of hybrid vehicles or electric vehicles, and for power storage. A secondary battery generally includes an electrode assembly including (or consisting of) a positive electrode and a negative electrode, a case accommodating the electrode assembly, a terminal part connected to the electrode assembly, etc.

Lithium-ion batteries are widely used in a variety of electronic devices, electric vehicles, energy storage systems, etc. due to their high energy density and long lifespan. Prismatic lithium-ion battery modules are often utilized as primary energy storage devices for electric vehicles. However, these batteries experience a phenomenon in which they expand (so-called cell swelling) during charging and discharging, which applies unexpected stress to the internal components of the battery modules.

Conventional plate ends are made of aluminum and have a thick, singlepiece structure to increase their rigidity. However, this design may cause breakage of the plate ends during long-term use because it cannot sufficiently absorb the dynamic and static stresses caused by cell swelling. In addition, cast aluminum parts have poor physical properties due to internal defects (e.g., pores, etc.), which act as a significant cause of reduced stability of battery modules.

The above information disclosed in this Background section is for enhancement of understanding of the background of the present invention, and therefore, it may contain information that does not constitute the related (or prior) art.

### SUMMARY

According to embodiments of the present invention, plate ends that are able to effectively absorb the stress caused by cell swelling while preventing breakage and technology for manufacturing them are provided. Plate ends, according to embodiments of the present invention, significantly enhance durability of secondary battery modules through structural improvement and manufacturing processes.

Accordingly, plate ends, according to embodiments of the present invention, can effectively absorb and disperse stress caused by cell swelling, thereby preventing damage to components of battery modules and enhancing durability thereof. Embodiments of the present invention reduce or prevent stress concentration in a plate end during swelling by using a laminated metal plate structure including multiple layers and a curved design, which ensures structural stability and manufacturing flexibility thereof through various connections, such as rivets, adhesives, and rubber structures.

In addition, embodiments of the present invention avoid pore defects present in conventional plate ends by using aluminum alloy plates that have not been subjected to a casting process, which maintains stability of the plate ends for long-term use by providing high strength and elongation thereto. This improves safety and reliability of battery modules and electric vehicles including them.

However, aspects and features of the present invention are not limited to the above described aspects and features, and other aspects and features not specifically mentioned herein will be clearly understood by those skilled in the art from the description of the present invention below.. The present invention is set out in the appended set of claims, wherein the drawings and respective description relate to advantageous embodiments thereof.

According to an aspect of the present invention, a plate end for cell swelling prevention that absorbs stress caused by cell swelling in secondary batteries is provided. The plate end includes a laminated part including a metal plate having multiple, independent layers, the metal plate having a curved structure, and fixing parts at opposite ends of the laminated part to fix the plate end.

The metal plate may be made of an aluminum alloy.

The laminated part may include a riveting structure connecting the individual layers.

Rivets in the riveting structure may spaced apart evenly at a distance between 10 mm and 20 mm, and the rivets may be made of stainless steel.

The individual layers of the metal plate may be connected by an adhesive epoxy.

The individual layers of the metal plate may be connected by using either a rubber structure or shrink tubing.

Each of the fixing parts may include a reinforcement rib configured to absorb stress from outside of the plate end, and the reinforcement rib may be integrated with the curved structure of the laminated part.

According to another aspect of the present invention, a method of manufacturing plate ends for cell swelling prevention that prevents plate end fracture due to cell swelling in prismatic lithium-ion battery modules is provided. The method includes forming a laminated part including a metal plate having multiple, independent layers and having a curved structure, and forming fixing parts at opposite ends of the laminated part to fix a plate end therethrough.

The metal plate may be made of aluminum alloy.

The laminated part may include a riveting structure between the individual layers.

Rivets in the riveting structure may be spaced apart evenly at a distance between 10 mm and 20 mm, and the rivets may be made of stainless steel.

The individual layers of the metal plate may be connected by an adhesive epoxy.

The individual layers of the metal plate may be connected by using either a rubber structure or shrink tubing.

Each of the fixing parts may include a reinforcement rib configured to absorb stress from outside of the plate end, and the reinforcement rib may be integrated with the curved structure of the laminated part.

According to a third aspect of the present invention, a secondary battery that includes a plate end for cell swelling prevention that is configured to absorb stress caused by cell swelling is provided. The plate end includes a laminated part including a curved metal plate with multiple, independent layers, and fixing parts at opposite ends of the laminated part to fix the plate end.

The metal plate may be made of aluminum alloy.

The laminated part may include a riveting structure between the individual layers of the metal plate.

Rivets in the riveting structure may be spaced apart evenly at a distance between 10 mm and 20 mm, and the rivets may be made of stainless steel.

The individual layers of the metal plate may be connected by an adhesive epoxy.

The individual layers of the metal plate may be connected by using either a rubber structure or shrink tubing.

### BRIEF DESCRIPTION OF THE DRAWINGS

The following accompanying drawings illustrate embodiments of the present invention and further describe aspects and features of the present invention together with the detailed description of the present invention. Thus, the present invention should not be construed as being limited to the drawings, in which:
FIG. 1A is a top perspective view of a prismatic secondary battery;
FIG. 1B is a cross-sectional view taken along the line I-I' in FIG. 1A;
FIG. 2 is a top perspective view of a conventional plate end;
FIG. 3 is a schematic diagram describing a configuration of a plate end according to an embodiment of the present invention;
FIGS. 4A and 4B are schematic views illustrating a plate end according to the related art;
FIGS. 5A and 5B are schematic views illustrating a riveting structure and spacing arrangement between individual layers in a laminated part according to an embodiment of the present invention;
FIG. 6 is a diagram and graphs describing a cross-section of a laminated metal plate according to an embodiment of the present invention;
FIGS. 7A and 7B are schematic illustrations illustrating a plate end response to swelling force according to the related art;
FIGS. 8A and 8B are schematic illustrations illustrating a laminated part connection method according to an embodiment of the present invention;
FIGS. 9A is a schematic illustration describing laminated part formation and fixing part formation according to an embodiment of the present invention;
FIG. 9B is a schematic illustration describing a riveting structure according to an embodiment of the present invention;
FIG. 9C is a schematic illustration describing a connection structure with adhesive epoxy application according to an embodiment of the present invention;
FIG. 9D is a schematic illustration describing a rubber structure or shrink tubing finish according to an embodiment of the present invention; and
FIG. 10 is a flowchart describing a method of manufacturing plate ends for cell swelling prevention according to an embodiment of the present invention.

### DETAILED DESCRIPTION

Embodiments of the present invention will be described below, in detail, with reference to the accompanying drawings. The terms or words used in this specification and claims should not be construed as being limited to their common or dictionary meanings but instead should be understood based on the principle that an inventor can define the concept of each term suitably in order to describe his/her own invention in the best way possible. The embodiments described in this specification and the configurations illustrated in the drawings are only some examples of the present invention and do not cover all the technical ideas of the present invention, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present invention, the accompanying drawings may not be drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present invention relates to "one or more embodiments of the present invention". Expressions, such as "at least one" and "one or more," preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

For example, the expression "at least one of a, b, or c" indicates only a, only b, only c, both a and b, both a and c, both b and c, all of a, b, and c, or variations thereof.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present invention and is not intended to limit the present invention.

The present invention will be described, in detail, with reference to the attached drawings.

Examples of secondary batteries include a coin type, a cylindrical type, a prismatic type, and a pouch type. The present invention is basically applicable to a prismatic secondary battery. Therefore, the prismatic secondary battery will first be briefly described prior to description of embodiments of the present invention.

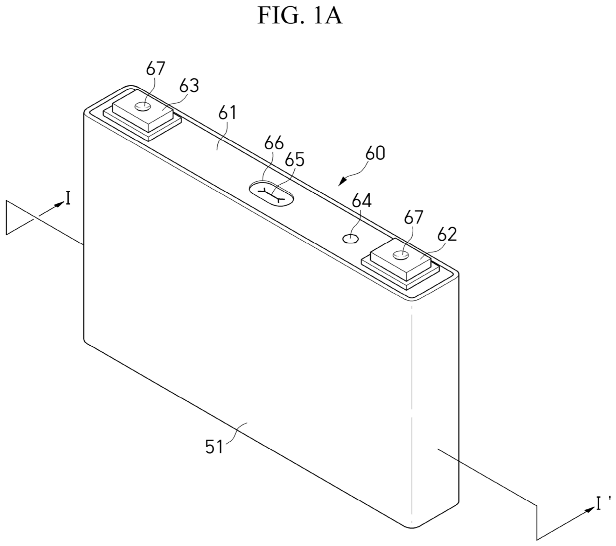

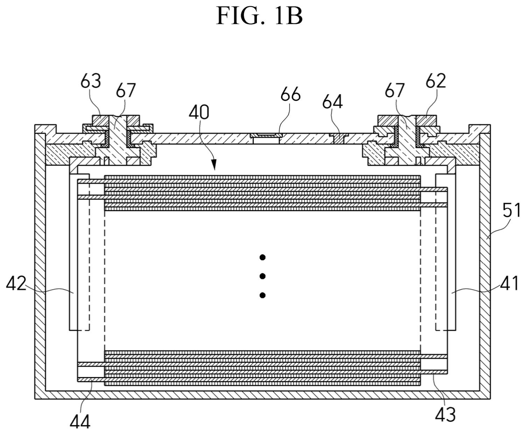

FIG. 1A is a top perspective view of a prismatic secondary battery, and FIG. 1B is a cross-sectional view taken along the line I-I' in FIG. 1A.

First, the external appearance of the prismatic secondary battery illustrated in FIG. 1A will be described.

A casing 51 defines an overall appearance of the prismatic secondary battery and may be made of a conductive metal, such as aluminum, aluminum alloy, or nickel-plated steel. In addition, the casing 51 may provide a space for accommodating an electrode assembly therein.

A cap assembly 60 may include a cap plate 61 that covers an opening in the casing 51, and the cap assembly 60 and the cap plate 61 may be made of a conductive material. A first terminal 62 and a second terminal 63 may be electrically connected to respective positive and negative (or negative and positive) electrodes inside the casing 51 and may be installed to protrude outwardly through the cap plate 61.

The cap plate 61 may have an electrolyte injection port 64 in which a sealing plug is installed and a vent 66 formed with a notch 65. The vent 66 is for degassing the secondary battery, for example, for discharging excess gas generated inside the secondary battery.

With reference to FIG. 1B, the internal structure of the prismatic secondary battery and the coupling structure with the cap assembly 60 shown in FIG. 1A will be described.

As illustrated in FIG. 1B, the prismatic secondary battery may basically include an electrode assembly 40, a first current collector part 41, the first terminal 62, a second current collector part 42, the second terminal 63, and the cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing 51. The electrode assembly 40 may be a stack type rather than a winding type, but the shape of the electrode assembly 40 is not limited. In addition, the electrode assembly 40 may be a Z-stack electrode assembly in which a first electrode plate and a second electrode plate are inserted into both (or opposite) sides of a separator, which is then bent into a Z-stack. Furthermore, the electrode assembly 40 may include one or more electrode assemblies, which are stacked such that their long sides are adjacent to each other and accommodated together in the casing 51, and the number of electrode assemblies is not limited. The electrode assembly 40 may include a first electrode plate that acts as a negative electrode and a second electrode plate that acts as a positive electrode, or vice versa.

The first electrode plate may be formed by applying a first electrode active material, such as graphite or carbon, to a first electrode current collector plate made of a metal foil, such as copper, a copper alloy, nickel, or a nickel alloy. The first electrode plate may include a first electrode tab (e.g., a first uncoated part) 43, which is a region of the first electrode current collector plate without application of the first electrode active material. The first electrode tab 43 may act as a current flow passage between the first electrode plate and the first current collector part 41. In some embodiments, the first electrode tab 43 may be formed by cutting the first electrode plate to protrude to one side in advance when manufacturing the first electrode plate or may protrude further to one side than the separator without separate cutting.

The second electrode plate may be formed by applying a second electrode active material, such as a transition metal oxide, to a second electrode current collector plate made of a metal foil, such as aluminum or an aluminum alloy. The second electrode plate may include a second electrode tab (e.g., a second uncoated part) 44, which is a region of the second electrode current collector without application of the second electrode active material. The second electrode tab 44 may act as a current flow passage between the second electrode plate and the second current collector part 42. In some embodiments, the second electrode tab 44 may be formed by cutting the second electrode plate to protrude to the other side in advance when manufacturing the second electrode plate or may protrude further to the other side than the separator without separate cutting.

In some embodiments, the first electrode tab 43 may be located on the right end side of the electrode assembly 40, and the second electrode tab 44 may be located on the left end side of the electrode assembly 40. In another embodiment, the first electrode tab 43 and the second electrode tab 44 may be located on one end side (e.g., the same end side) of the electrode assembly 40 in the same direction. Here, the left and the right are represented based on the secondary battery illustrated in FIG. 1 for convenience of explanation, and they may change in position when the secondary battery is rotated left and right or up and down.

The separator prevents a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described above with reference to FIG. 1A, through terminal pins 67, respectively. In some embodiments, the terminal pins 67 may each have an outer peripheral surface that is threaded and may be fastened to the first terminal 62 and the second terminal 63 by screwing. However, the present invention is not limited thereto. For example, the terminal pins 67 may also be coupled to the first terminal 62 and the second terminal 63 by riveting or welding.

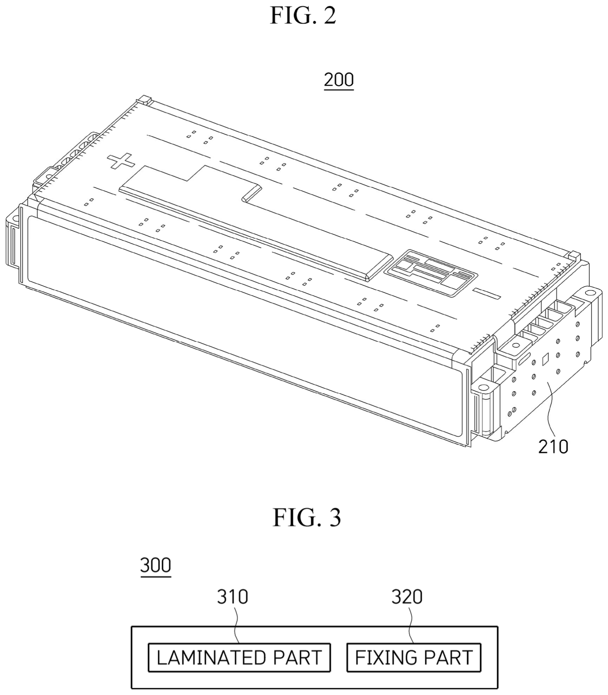

FIG. 2 is a schematic illustration of a plate end for cell swelling prevention according to the related art.

Embodiments of the present invention provide a plate end that avoids or prevents fracture caused by cell swelling in prismatic lithium-ion battery modules. For example, embodiments of the present invention enhance the durability and reliability of battery modules by providing a structure capable of effectively absorbing stress caused by cell swelling.

Lithium-ion batteries experience a phenomenon of swelling in which gas is generated and electrodes expand inside cells as their charge/discharge cycles are repeated (e.g., as the number of charge/discharge cycles increases). This swelling causes the cells to swell outwardly, thereby applying continuous pressure on plate ends that protect the cells. A conventional plate end is typically manufactured by aluminum (Al) casting and has poor physical performance due to internal defects, such as pores. In other words, a conventional aluminum-casted plate end may be easily broken due to swelling force because it has low ultimate tensile strength and elongation.

As illustrated in FIG. 2, a conventional plate end 210 is located at each of both ends of a battery module 200 to absorb (e.g., to directly absorb) the stress caused by cell swelling. A cell in its initial state remains normal without deformation but gradually swells as its charge/discharge cycle progresses. As the swelling of the cell progresses, the cell applies continuous stress to the plate end 210 by expanding laterally, which may result in the plate end 210 cracking or fracturing.

Embodiments of the present invention include a plate end structured by laminating elongated metal plates rather than by conventional casting. The laminated structure has flexible properties that allow each layer to independently adapt to the displacement of the plate end by connecting individual metal plate layers by using rivets, adhesive epoxy, rubber structures, or shrink tubing. In an embodiment, the individual layers of the metal plate may be connected by using either a rubber structure or shrink tubing. In addition, the plate end itself is designed in a curved shape, which increases the displacement thereof when swelling force is applied thereto and delays the timing of stress absorption.

Embodiments of the present invention can prevent or mitigate plate end fracture even when cell swelling in battery modules progresses through such structural improvement. Different from the conventional plate end made by casting, the plate end according to embodiments of the present invention is able to maintain high durability even though swelling stress occurs repeatedly during charge/discharge cycles, thereby extending the lifespan of the battery modules.

Therefore, embodiments of the present invention are suitable for highperformance applications, such as electric vehicle batteries, by improving the properties of plate ends in prismatic lithium-ion battery modules.

FIG. 3 is a schematic diagram describing a plate end for cell swelling prevention according to an embodiment of the present invention.

FIG. 3 illustrates a configuration of the plate end for cell swelling prevention according to an embodiment of the present invention. Embodiments of the present invention are designed to absorb stress caused by cell swelling in a prismatic lithium-ion battery module for prevention of plate end fracture. Referring to FIG. 3, the plate end 300 includes a laminated part 310 and a fixing part 320.

The laminated part 310 includes a metal plate including (or composed of) multiple layers, and each of the layers having an elongated metal plate-like structure (also referred to as a "metal plate"). The metal plate has a curved structure. This laminated structure provides flexibility that allows each layer to independently adapt to the displacement of the plate end when the plate end absorbs swelling force. The metal plate-like structure may be made of aluminum alloy, which provides high strength and durability while being lightweight. The individual layers of the laminated part 310 are connected to each other by using rivets, adhesive epoxy, rubber structures, or shrink tubing. The rivets increase mechanical bonding between the individual layers, and the adhesive epoxy strengthens interlayer adhesion, thereby improving the overall strength of the plate end. The rubber structures or shrink tubing are suitable for absorbing swelling force as they further improve the flexibility and strength of the plate end.

The fixing parts 320 are located at both ends of the laminated part 310 and fix the plate end to the outer structure of the battery module. Thus, the fixing parts 320 are located at opposite ends of the laminated part 310 to fix the plate end 300. The fixing parts 320 are designed to absorb the stress transmitted from the outside of the plate end, and each includes reinforcement ribs to strengthen its structural rigidity. The reinforcement ribs are integrated with (e.g., are integrally formed with) the curved structure of the laminated part and act to effectively disperse swelling force. The fixing parts 320 are also designed to evenly transmit swelling force across the plate end, thereby preventing or mitigating localized stress concentration. In an embodiment, each of the fixing parts 320 may comprise a reinforcement rib configured to absorb stress from outside of the plate end 300.

Plate ends, according to embodiments of the present invention, include the combination of the laminated part 310 and the fixing parts 320 as an improvement of casted plate ends. For example, the conventional plate end is manufactured by aluminum casting and has poor physical properties due to internal pores, whereas the laminated structure according to embodiments of the present invention allows each layer to independently absorb stress, thereby significantly reducing the risk of fracture. In addition, the curved design according to embodiments of the present invention allows the plate end to have an increased length, thereby increasing the time required to absorb stress, which is very effective in preventing fracture due to cell swelling.

In additional embodiments, corrosion resistance may be improved by applying surface treatment techniques to each layer in the laminated part 310. For example, chemical damage that may occur in battery's internal environments may be avoided by applying oxidation treatment or polymer coating to the metal plates. In further embodiments, the number of layers in the laminated part 310 and the thickness thereof may be adjusted depending on the designed or anticipated swelling force thereof. For a large battery module exhibiting high swelling force, it may be strengthened by adding more layers to the laminated part 310, whereas for a small battery module, cost and weight may be optimized by reducing the number of layers.

Different methods of installation of the fixing parts 320 may be used. For example, the fixing parts 320 may be directly bolted to the outer structure of the battery module or may be designed as plates integrated with the battery module to simplify assembly processes. The fixing parts 320 may each be made of a plastic-metal composite material, which achieves both weight reducing and rigidity improvement.

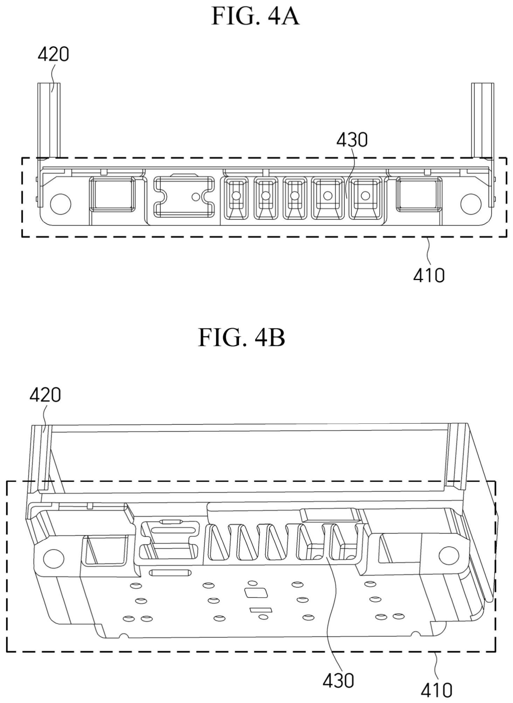

FIGS. 4A and 4B are schematic views illustrating a plate end according to the related art.

Referring to FIG. 4, in the related art, a plate end 410 and side plates 420 are manufactured by casting and designed to maintain a structurally rigid form. The casting process provides additional structure to reinforce a laminated part, including rigidity reinforcement ribs 430 but may cause deterioration of physical properties due to defects, such as pores therein, which increases the likelihood that the laminated part will not effectively absorb the stress caused by cell swelling force, resulting in fracture due to localized stress concentration on the plate end. FIGS. 4A and 4B visually illustrate the structural problems of the related art.

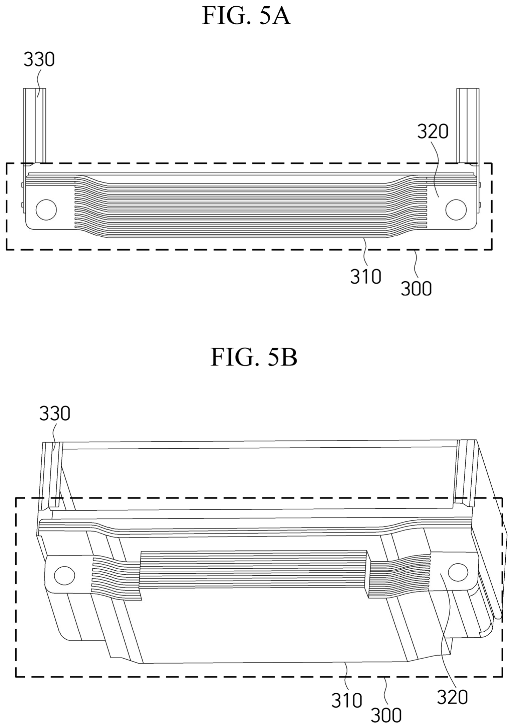

FIGS. 5A and 5B are schematic views of a plate end illustrating a riveting structure and spacing arrangement between individual layers in a laminated part according to an embodiment of the present invention.

Referring to FIGS. 5A and 5B, according to embodiments of the present invention, each of the layers forming the laminated part 310 is made from a thin, disclike aluminum (Al) plate and has a curved shape to provide flexibility to adapt to swelling force. The laminated part 310 is fixed to the outside of the battery module through the side plates 330 and the fixing parts 320, and the individual layers of the laminated part 310 are connected in various suitable manners, such as by rivets, adhesive epoxy, rubber structures, or shrink tubing.

In FIGS. 5A and 5B, the rivet connections are evenly arranged between the respective layers and are designed so that each layer is able to independently respond to deformation even when swelling force occurs. This connection method enhances the durability and flexibility of the entire plate end compared to the rigid structure of the related art.

The laminated part 310 according to an embodiment of the present invention ensures the length of the plate end through its curved structure and increases the displacement thereof required to absorb swelling force. In addition to the riveting, the connection method with adhesive epoxy strengthens interlayer bonding, and the connection method with rubber structures or shrink tubing maintains the stability of the laminated part 310 even under environments experiencing large displacement. This allows the plate end to effectively absorb and disperse the swelling force generated during the repetitive charge/discharge process.

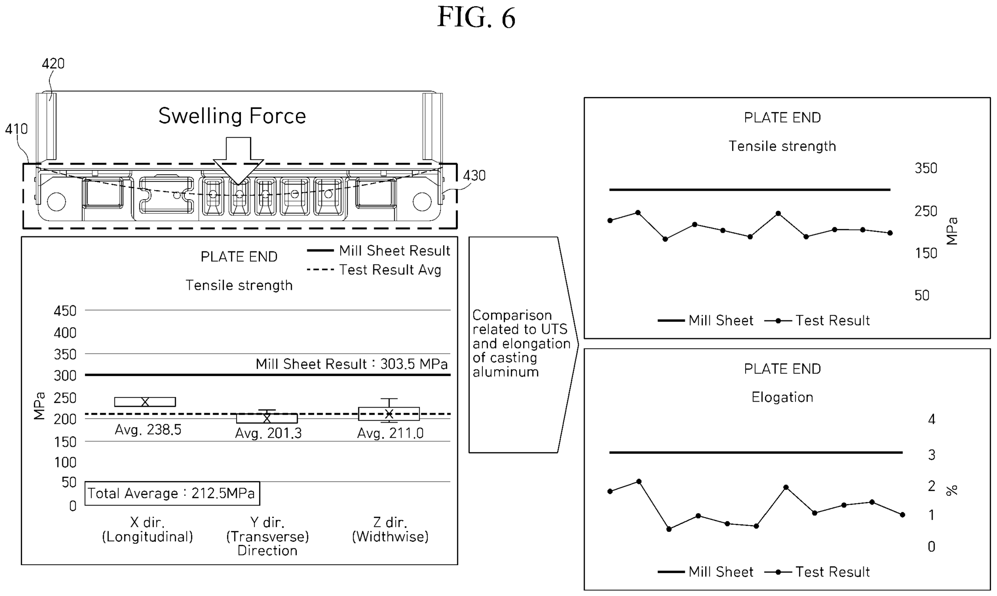

FIG. 6 is a graph describing the laminated metal plate according to an embodiment of the present invention.

Referring to FIG. 6, the plate end 410 includes the laminated part, the side plates 420, and the rigidity reinforcement ribs 430. The laminated part is manufactured by laminating thin metal plates, providing flexibility and strength by allowing each layer to independently respond to the displacement of the plate end even though a swelling force occurs. The top-left diagram in FIG. 6 visually illustrates the plate end withstanding the pressure caused by cell swelling.

The graph on the bottom-left of FIG. 6 illustrates the results of comparison between the ultimate tensile strength and the elongation of the plate end 410. As illustrated in the graph, the conventional plate end made by casting was measured to have an average tensile strength of about 212.5 MPa due to poor physical properties caused by internal pores and defects. This result is lower than the aluminum properties (303.5 MPa) and SDI Spec (240 MPa) in the mill sheet state, showing that the pore defects in the casting process cause structural weaknesses.

On the other hand, the laminated plate end according to embodiments of the present invention is manufactured by laminating high-strength aluminum plates in a curved structure. This curved design increases the displacement of the plate end when swelling force occurs, preventing stress concentration and dispersing stress evenly across the laminated structure. Moreover, the mechanical strength of the plate end is further strengthened by bonding the laminated part by using rivets or adhesive epoxy between individual layers therein.

The graph on the upper-right of FIG. 6 illustrates the results of comparison of the tensile strength of the plate end in X-axis (longitudinal), Y-axis (transverse), and Z-axis (widthwise) directions. The laminated structure maintains higher strength in all directions compared to the related art design. The graph on the bottom-right of FIG. 6 illustrates a comparison of elongations and shows that the laminated plate end has an elongation of 4% or more on average, which greatly improves the deformation resistance thereof compared to the related art plate end (about 2%).

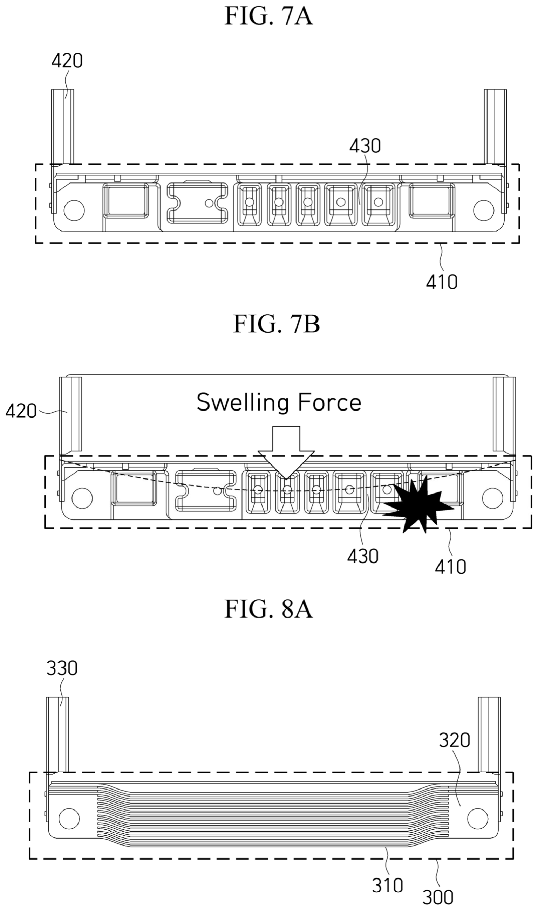

FIGS. 7A and 7B are schematic illustrations of a conventional plate end connection method.

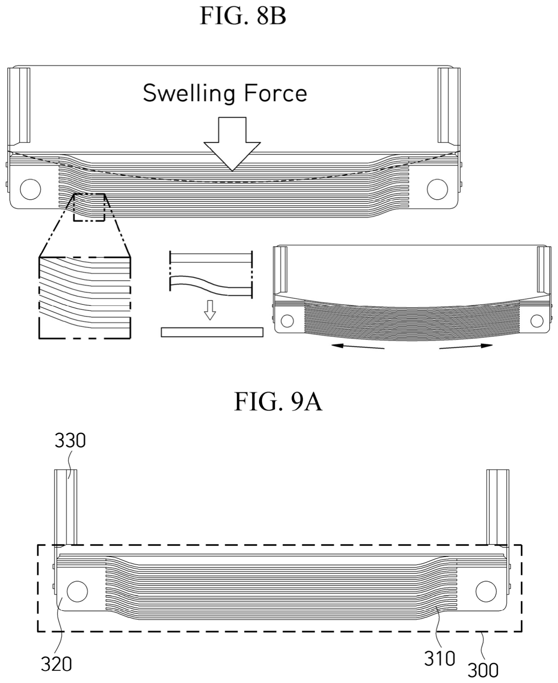

FIGS. 8A and 8B are schematic view illustrating a laminated part connection method according to an embodiment of the present invention.

FIGS. 7A to 8B are schematic views presented to visually compare the conventional connection method and the laminated part connection method according to an embodiment of the present invention, respectively. The laminated part connection method according to embodiments of the present invention provides a structure that is capable of effectively dispersing and absorbing the stress caused by cell swelling force.

FIGS. 7A and 7B illustrate a method of forming the cast plate end according to the related art. Conventionally, the plate end 410 manufactured by casting was designed so that the side plates 420 are bonded to the plate body to absorb swelling force. However, due to the nature of the casting process, there are internal pores and manufacturing defects in the plate end, which are the primary causes of stress concentration and strength degradation. For example, despite the inclusion of the rigidity reinforcement ribs 430, the conventional plate end suffer localized fracture of the plate end if swelling force increases. The drawing visually illustrates the deformation and fracture caused by swelling force.

On the other hand, FIGS. 8A and 8B schematically illustrates the laminated part connection method according to embodiments of the present invention. The laminated part 310 according to embodiments of the present invention provides flexibility and strength by laminating thin metal plates in a curved shape. This curved structure increases the length of the laminated part to extend the displacement of the plate end that occurs when swelling force is applied thereto, thereby increasing or maximizing stress dispersion effects. In addition, the metal plates have a disc form, simplifying manufacturing processes while maintaining strength and flexibility.

The laminated part 310 is bonded to the outer structure of the battery module by the side plates 330 and the fixing parts 320, and the individual layers therein may be connected by rivets, adhesive epoxy, or rubber structures. The rivets may increase mechanical strength, the epoxy adhesive may strengthen interlayer bonding, and the rubber structures may maintain flexibility even under environments with high displacement. This connection method evenly disperses the stress caused by swelling force across the laminated part, preventing localized stress concentration on the plate end.

The laminated part connection method according to embodiments of the present invention provides the following benefits compared to the relate art. First, this method ensures the length of the plate end through the curved design and strengthens stress dispersion capabilities. Second, this method can adjust the strength and flexibility of the laminated part through various connection methods, enabling the implementation of the structure optimized for the environment of swelling force. Third, this method can improve manufacturing process efficiency and reduce costs since the metal plate of the laminated part is used in a disc form.

FIG. 9A is a schematic view describing the formation of the laminated part 310 and the formation of the fixing parts 320 according to an embodiment of the present invention.

The laminated part 310 is formed by laminating elongated metal plates and plays a major structural role in the plate end. The laminated metal plate is designed in a curved shape, which is effective in absorbing the displacement of the plate end and dispersing the stress thereon according to swelling force. The laminated part is bonded to the outer structure of the battery module by the side plates 330 and the fixing parts 320, which allows the plate end to be stably fixed to the battery module. The individual layers in the laminated part 310 may be connected by any one of rivets, adhesive epoxy, and rubber structures, which are selectively applied for each purpose.

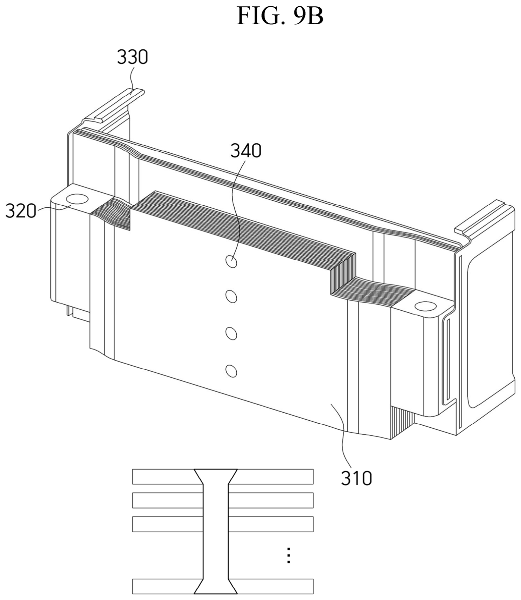

FIG. 9B is a schematic view describing a riveting structure 340 according to an embodiment of the present invention. The riveting structure 340 mechanically bonds the individual layers in the laminated part to provide high strength and durability therefor. In an embodiment, the laminated part 310 may comprise a riveting structure 340 connecting the individual layers. The riveting structure 340 may be arranged in a single row or double row, thereby optimizing the connection strength of the laminated part 310. The rivets in the riveting structure 340 may be spaced apart evenly at a distance in a range between 10 mm and 20 mm. The rivets may be made of stainless steel. The riveting structure 340 may operate stably even under high-pressure environments and may effectively withstand swelling force generated during repetitive charge/discharge processes. The drawing illustrates an embodiment in which the individual metal plates are bonded by the rivets therethrough, which increases the stability and rigidity of the laminated part 310.

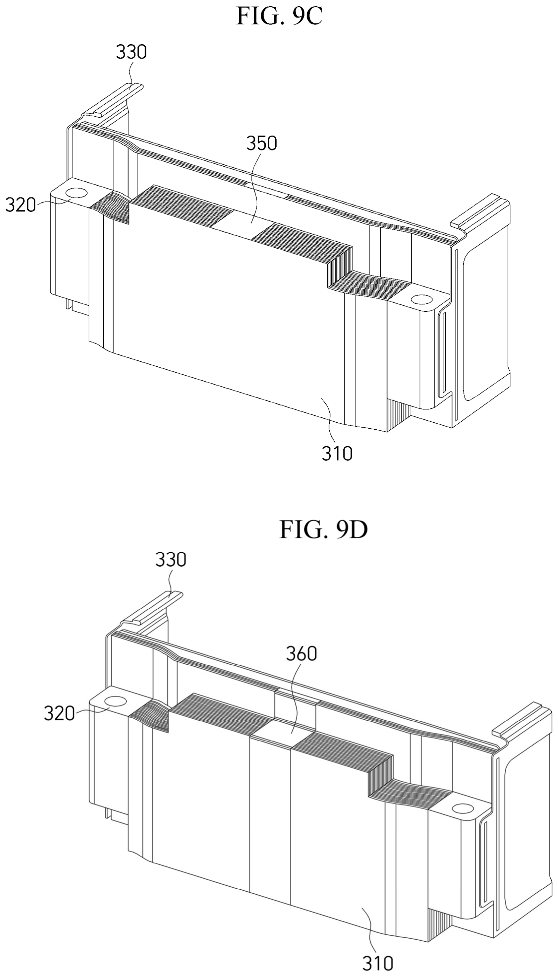

FIG. 9C is a schematic view describing a connection structure with adhesive epoxy application 350 according to an embodiment of the present invention. Thus, the laminated part 310 may be configured such that the individual layers of the metal plate are connected by an adhesive epoxy. The adhesive epoxy is applied between the individual layers of the laminated part 310 to provide strong interlayer bonding. This allows for uniform stress dispersion across the surface of the laminated part, strengthening the mechanical strength of the plate end. The adhesive may maintain stable bonding even under high-temperature and high-humidity environments by utilizing metal bond technology. The drawing illustrates an embodiment in which the adhesive is applied between the metal plates, and this design prevents stress concentration on the plate end and improves the deformation resistance of the laminated part 310.

FIG. 9D is a schematic view describing a rubber structure or shrink tubing finish according to an embodiment of the present invention.

FIG. 9D is a view for explaining a rubber structure or shrink tubing finish 360 according to an embodiment of the present invention. The rubber structure or shrink tubing finish 360 maximizes the flexibility of the laminated part 310 and effectively absorbs the deformation energy caused by swelling force. The rubber structures protect the individual layers of the laminated part 310 and also protects the plate end from external environments. The shrink tubing integrates the laminated part and the side plates to disperse the stress caused by swelling force and increase the structural stability of the plate end. The drawing illustrates an embodiment in which the rubber structure or shrink tubing finish 360 wraps around the laminated part 310, which strengthens the stability and durability of the laminated part 310.

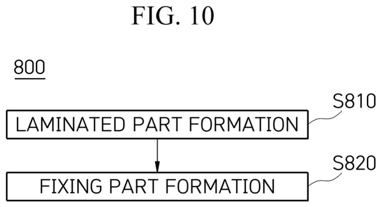

FIG. 10 is a flowchart describing a method of manufacturing plate ends for cell swelling prevention according to an embodiment of the present invention.

FIG. 10 is a flowchart describing a method of manufacturing plate ends for cell swelling prevention 800 step by step according to an embodiment of the present invention. The method according to embodiments of the present invention includes two primary steps: a laminated part formation step S810 and a fixing part formation step S820, which allows for manufacturing a structure that absorbs swelling force and prevents fracture of a plate end.

First, the laminated part formation step S810 is a process of forming a laminated part, which is the primary structure of the plate end, by laminating a plurality of metal plates. Each of the metal plates used in this step has an elongated plate-like structure, which is made of a high-strength and lightweight material, such as an aluminum alloy. The laminated metal plate is designed to have a curved structure, which absorbs swelling force and increases the displacement of the plate end to maximize stress dispersion thereon. The individual layers of the metal plate are connected to each other in various suitable ways, such as by rivets, adhesive epoxy, rubber structures, or shrink tubing. The rivets increase mechanical strength, the adhesive epoxy strengthens interlayer bonding, and the rubber structures or shrink tubing contribute to improving the flexibility of the laminated part. The spacing between the individual layers in the laminated part is maintained uniformly, which allows the entire laminated structure to achieve stable stress dispersion and absorption.

Next, the fixing part formation step S820 is a process of forming fixing parts that fix the laminated part to the outer structure of the battery module. The fixing parts are located at both ends of the plate end and are designed to allow the plate end to adapt to the swelling force generated in the battery module. The fixing parts each provides structural rigidity, including reinforcement ribs, and the reinforcement ribs are integrated with the curved structure of the laminated part to contribute to evenly dispersing swelling force. The fixing parts are also designed to stably fix the laminated part even under external shock and vibration.

The method according to embodiments of the present invention may effectively implement the plate end that absorbs and disperses swelling force compared to conventional technology. The conventional plate end made by casting has poor physical properties due to internal pore defects and is highly prone to its fracture due to stress concentration thereon. On the other hand, the method according to embodiments of the present invention may manufacture the laminated part and the fixing parts separately, thereby allowing each structure to be optimized independently. The laminated part provides flexibility and stress absorption capabilities, and the fixing parts stably fix the plate end and evenly disperse swelling force.

In addition, the method according to embodiments of the present invention may be changed and adjusted depending on different embodiments. For example, it is possible to provide a design suitable for large or small battery modules by adjusting the thickness and number of layers of the metal plate in the laminated part. The design of the reinforcement ribs of the fixing parts may be optimized according to the magnitude of the swelling force and the size of the battery module. Additionally, corrosion resistance may be improved to protect the plate end from the battery's internal environment by applying surface treatments (e.g., oxidation treatment, polymer coating, etc.) to the plate end.

Hereinafter, materials which may be used in a secondary battery according to an embodiment of the present invention are described. Moreover, the secondary battery includes the plate end 300 according to the present invention is used for cell swelling prevention that is configured to absorb stress caused by cell swelling.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphatebased compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be about 90 wt.% to about 99 wt.% with respect to the positive electrode active material layer 100 wt.%. Content of the binder and the conductive material may be about 0.5 wt.% to about 5 wt.% with respect to the positive electrode active material layer 100 wt.%.

Al may be used as the current collector, but the present invention may not be limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x≤2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example the negative electrode active material layer may include the negative electrode active material of about 90 wt.% to about 99.5 wt.%, the binder of about 0.5 wt.% to about 5 wt.%, and the conductive material of about 0 wt.% to about 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present invention is not limited thereto.

The organic matter and the inorganic matter may have a form in which the organic matter and the inorganic matter have been mixed in one coating layer or a form in which a coating layer including the organic matter and a coating layer including the inorganic matter have been stacked.

As is apparent from the above description, according to embodiments of the present invention, the breakage of the battery modules may be prevented and the durability thereof may be significantly enhanced by providing the plate end capable of effectively absorbing and dispersing the stress caused by cell swelling. For example, stress concentration may be prevented in the plate end and the stability of the battery modules may be strengthened by effectively absorbing deformation due to cell swelling through the laminated metal plate structure with multiple layers and the curved design.

In addition, the manufacturing process flexibility and structural stability of the plate end may be ensured by applying various connections, such as rivets, adhesives, and rubber structures, thereto, and to maintain the stability of the plate end even for long-term use by eliminating pore defects and maintaining high physical properties through the use of aluminum alloy plates. These aspects and features allow for a dramatical improvement in reliability and safety of the battery modules and the electric vehicles including them.

However, aspects and features of the present invention are not limited to those described above, and other aspects and features not mentioned will be clearly understood by a person skilled in the art from the detailed description, described above.

Although the present invention has been described above in connection with the some embodiments and drawings, the present invention is not limited to the embodiments described herein.

## Claims

1. A plate end (300) for cell swelling prevention by absorbing stress caused by cell swelling in secondary batteries, the plate end (300) comprising:
a laminated part (310) comprising a metal plate having multiple, individual layers, the metal plate having a curved structure; and
fixing parts (320) at opposite ends of the laminated part (310) to fix the plate end (300).

2. The plate end (300) as claimed in claim 1, wherein the metal plate is made of an aluminum alloy.

3. The plate end (300) as claimed in claim 1 or 2, wherein the laminated part (310) comprises a riveting structure (340) connecting the individual layers.

4. The plate end (300) as claimed in claim 3, wherein rivets in the riveting structure (340) are spaced apart evenly at a distance in a range between 10 mm and 20 mm, and
wherein the rivets are made of stainless steel.

5. The plate end (300) as claimed in any of claims 1 to **4,** wherein the laminated part (310) is configured such that the individual layers of the metal plate are connected by an adhesive epoxy.

6. The plate end (300) as claimed in any of claims 1 to 5, wherein the individual layers of the metal plate are connected by using either a rubber structure or shrink tubing.

7. The plate end (300) as claimed in any of claims 1 to 6, wherein each of the fixing parts (320) comprises a reinforcement rib configured to absorb stress from outside of the plate end (300), and
wherein the reinforcement rib is integrated with the curved structure of the laminated part (310).

8. A method of manufacturing plate ends (300) for cell swelling prevention (800) that prevents plate end (300) fracture due to cell swelling in prismatic lithium-ion battery modules, the method comprising:
forming a laminated part (310) comprising a metal plate having multiple, individual layers, the laminated part (310) having a curved structure; and
forming fixing parts (320) at opposite ends of the laminated part (310) to fix a plate end (300) therethrough.

9. The method as claimed in claim 8, wherein the metal plate is made of an aluminum alloy.

10. The method as claimed in claim 8 or 9, wherein the laminated part (310) comprises a riveting structure (340) connecting the individual layers.

11. The method as claimed in claim 10, wherein rivets in the riveting structure (340) are spaced apart evenly at a distance between 10 mm and 20 mm, and
wherein the rivets are made of stainless steel.

12. The method as claimed in any of claims 8 to 11, wherein, in the forming of the laminated part (310), the individual layers of the metal plate are connected by an adhesive epoxy.

13. The method as claimed in any of claims 8 to 12, wherein, in the forming of the laminated part (310), the individual layers of the metal plate are connected by using either a rubber structure or shrink tubing.

14. The method as claimed in any of claims 8 to 13, wherein each of the fixing parts (320) comprises a reinforcement rib configured to absorb stress from outside of the plate end (300), and
wherein the reinforcement rib is integrated with the curved structure of the laminated part (310).

15. A secondary battery comprising the plate end (300) according to any one of claims 1 to 7.
